# EUROPÄISCHE PATENTSCHRIFT

(11) **EP 0 766 075 B1**
(45) Veröffentlichungstag und Bekanntmachung des Hinweises auf die Patenterteilung: **12.06.2002**
(21) Anmeldenummer: 96111986.4
(22) Anmeldetag: 25.07.1996
(51) Int. Cl.: G01G 23/01

(54) **Verfahren zur gleichzeitigen Prüfung von mehreren Kraftaufnehmern, insbesondere Wägezellen, mit einer Drucklast**
Method for simultaneous testing a plurality of force sensors, in particular load cells, using a load
Procédé pour tester simultanément plusieurs capteurs de forces, en particulier capteurs de pesage, utilisant une charge

(30) Priorität: 27.09.1995 DE 19535926
(43) Veröffentlichungstag der Anmeldung: 02.04.1997
(73) Patentinhaber: Schenck Process GmbH, 64293 Darmstadt (DE)
(72) Erfinder: Milz, Udo, Dr., 64807 Dieburg (DE)
(74) Vertreter: Behrens, Helmut, Dipl.-Ing.

(56) Entgegenhaltungen:
- DE-B- 1 171 638
- REIMAR HELLWIG: "Precision force transducer for international comparison measurements on force standard machines" REPORTS IN APPLIED MEASUREMENT., Bd. 3, Nr. 1, 1987, DARMSTADT DE, Seiten 17-22, XP002055349

## Beschreibung

Die Erfindung betrifft ein Verfahren zur gleichzeitigen Prüfung von mehreren Kraftaufnehmern, insbesondere Wägezellen, mit einer Drucklast unter Verwendung einer Belastungsmaschine, bei der die Prüflast zwischen einer mit dem Maschinenfundament verbundenen Aufstellplatte und einem gegen die Aufstellplatte drückenden Teil der Belastungsmaschine wirksam ist.

Um Kraftaufnehmer oder Wägezellen hoher Qualität mit einer Drucklast prüfen zu können, müssen bestimmte Anforderungen an die Krafteinleitung erfüllt werden. Insbesondere sind ballige Druckstücke zur Einleitung der Kraft in den Kraftaufnahmekopf des Kraftaufnehmers oder der Wägezelle erforderlich, um die Einleitung störender Zwangskräfte zu vermeiden. Dies hat zur Folge, daß Wägezellen in Belastungsmaschinen in der Regel einzeln geprüft werden. Da der Prüfvorgang, insbesondere wenn Temperaturprüfungen notwendig sind, vergleichsweise hohe Kosten verursacht, besteht das Bedürfnis nach einem Verfahren zur gleichzeitigen Prüfung mehrerer Kraftaufnehmer oder Wägezellen in einer Belastungsmaschine, wobei das Verfahren allerdings so gestaltet sein muß, daß die Qualität der Prüfung gewährleistet bleibt.

Aus der DE-AS 1 171 638 ist eine Vorrichtung zur gleichzeitigen Prüfung von mehreren Kraftmeßdosen mit einer Prüfmaschine bekannt, bei der die Prüfkraft zwischen einem an einem ziehenden Teil der Maschine angelenkten Bügel einerseits und einem mit dem Maschinenfundament verbundenen Bügel andererseits entsteht, wobei mindestens ein zusätzlicher Bügel kettengliedartig zwischen die beiden mit der Maschine verbundenen Bügel eingefügt ist und die Kraftmeßdosen zwischen Druckkräfte übertragenden Jochen der ineinandergreifenden Bügel einsetzbar sind. Diese bekannte Vorrichtung erfordert eine komplizierte und zeitraubende Beschickung, da der zusätzliche Bügel angehoben und nach dem Einsetzen der ersten Kraftmeßdose abgesenkt werden muß, bevor die zweite Kraftmeßdose eingesetzt werden kann. Als nachteilig ist weiterhin anzusehen, daß die bekannte Vorrichtung viel Bauraum benötigt, wenn sie ausreichend biegesteif sein soll. Dies ist vor allem für Temperaturmessungen ungünstig, da der große Bauraum eine entsprechend große und teuere Klimakammer erfordert. Der zusätzliche Bügel mit seinen beiden Jochen belastet außerdem die obere Kraftmeßdose mit einer erheblichen Taramasse.

Der Erfindung liegt die Aufgabe zugrunde, ein Verfahren zur gleichzeitigen Prüfung von mehreren Kraftaufnehmern anzugeben, das die genannten Nachteile vermeidet und auf einfache und wirtschaftliche Weise mit einer eine Drucklast erzeugende Belastungsmaschine durchführbar ist.

Erfindungsgemäß wird diese Aufgabe dadurch gelöst, daß die Kraftaufnehmer in Reihe übereinander zwischen der Aufstellplatte und dem drückenden Teil der Belastungsmaschine angeordnet werden, daß die Krafteinleitung an jedem Kraftaufnehmer über wenigstens eine als Kugelkappe ausgebildete Kraftübertragungsfläche erfolgt, deren Radius so groß bemessen ist, daß bei der Belastung ein stabilisierendes Moment entsteht und daß der Pendelwinkel der Anordnung auf einen Wert begrenzt wird, der kleiner als der Reibungswinkel an den Kraftübertragungsflächen ist.

Das erfindungsgemäße Verfahren ermöglicht eine stabile Anordnung von zwei oder mehr Wägezellen übereinander zwischen der Aufstellplatte und dem drückenden Teil einer Belastungsmaschine. Sind die Kraftaufnehmer nicht mit einer als Kugelkappe ausgebildeten Kraftübertragungsfläche versehen, so kann an jedem Kraftaufnehmer jeweils ein Druckstück angeordnet sein, das auf einer Seite eine ebene und auf der entgegengesetzten Seite oder auf beiden Seiten eine als Kugelkappe ausgebildete Kraftübertragungsfläche hat. Das erfindungsgemäße Verfahren beruht auf der Erkenntnis, daß bei einer Anordnung von mehreren Kraftaufnehmern übereinander eine Einleitung von Zwangskräften in die einzelnen Kraftaufnehmer vermieden werden kann, wenn die Krafteinleitung in jeden Kraftaufnehmer wenigstens über eine als Kugelkappe ausgebildete Kraftübertragungsfläche erfolgt und daß die Stabilität einer solchen Anordnung mit mehreren kugelkappenförmigen Kraftübertragungsflächen gewährleistet ist, wenn die Anordnung den naturgesetzlichen Stabilitätsanforderungen genügt. Dies ist bei dem erfindungsgemäßen Verfahren durch die Radien der Kraftübertragungsflächen und die Begrenzung des Pendelwinkels gegeben.

Durch das erfindungsgemäße Verfahren wird die Prüfkapazität einer Belastungsmaschine bei der Prüfung von Kraftaufnehmern oder Wägezellen auf das Doppelte oder noch mehr erhöht. Das erfindungsgemäße Verfahren eignet sich sowohl zur Anwendung in Totlastbelastungsmaschinen als auch in Belastungsmaschinen mit hydraulischem Antrieb, Spindelantrieb etc.. Die Anwendung des erfindungsgemäßen Verfahrens erfordert keine baulichen Veränderungen an der Belastungsmaschine. Als zusätzliche Hilfsmittel sind allenfalls in ihren Abmessungen an die Kraftaufnehmer oder Wägezellen angepaßte Druckstücke mit als Kugelkappe ausgebildeter Kraftübertragungsfläche oder eine zwischen zwei Kraftaufnehmern anzuordnende Zwischenplatte erforderlich.

Als besonders vorteilhaft hat sich eine Anordnung zweier Kraftaufnehmer nach dem erfindungsgemäßen Verfahren erwiesen, bei der beide Kraftaufnehmer mit ihren Aufstellflächen aneinander abgestützt werden und ein Kraftaufnehmer mit seinem Kraftaufnahmekopf über ein Druckstück an der Aufstellplatte und der andere Kraftaufnehmer mit seinem Kraftaufnahmekopf über ein Druckstück an dem drückenden Teil abgestützt wird. Bei dieser Anordnung bilden die beiden Kraftaufnehmer mit der Zwischenplatte gewissermaßen einen Pendelstab, in den die Kraft an beiden Enden über Kugelkappen eingeleitet wird. Die erforderliche Stabilität wird hierbei erreicht, wenn der Radius der Kugelkappen größer ist, als die Länge des Pendelstabs. Diese Anordnung eignet sich auch für Belastungsmaschinen, bei denen die Aufstellplatte durch einen Drehteller gebildet wird. Hierbei kann das auf dem Drehteller angeordnete Druckstück einen zylindrischen Kragen haben, der das Gehäuse des Kraftaufnehmers mit geringem Abstand umgibt, wodurch auf einfache Weise eine Kippssicherung gebildet wird, die ein Umkippen der Kraftaufnehmeranordnung beim Weiterdrehen des Drehtellers verhindert.

Die Erfindung wird nachfolgend anhand eines Ausführungsbeispiels näher erläutert, das in der Zeichnung dargestellt ist. Es zeigen
- Figur 1: eine schematische Darstellung einer Wägezellenanordnung nach dem erfindungsgemäßen Verfahren in einer Belastungsmaschine mit Drehteller,
- Figur 2: eine schematische Darstellung einer weiteren Anordnung zweier Wägezellen nach dem erfindungsgemäßen Verfahren in einer Belastungsmaschine,
- Figur 3: eine schematische Darstellung einer erfindungsgemäßen Anordnung zweier Wägezellen in einer Belastungsmaschine unter Verwendung nur eines Druckstücks und
- Figur 4: eine schematische Darstellung einer Anordnung von drei Wägezellen nach dem erfindungsgemäßen Verfahren in einer Belastungsmaschine.

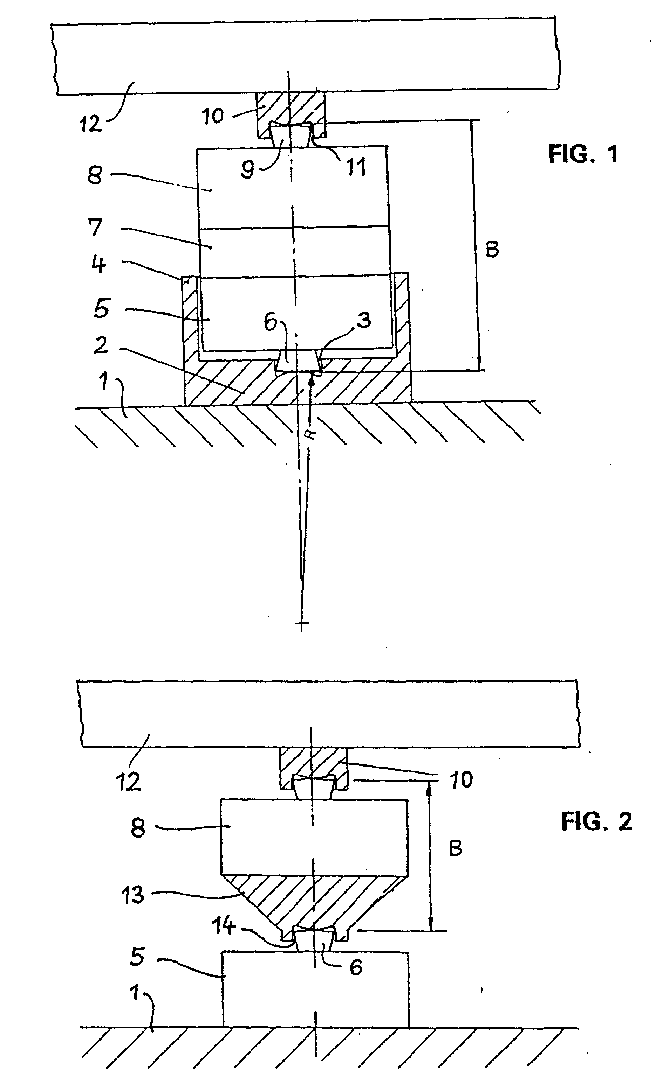

Bei dem Beispiel gemäß Figur 1 ist auf dem Drehteller 1 ein Druckstück 2 angeordnet, das eine mittige Ausnehmung 3 aufweist, deren Boden die Form einer Kugelkappe mit dem Radius R hat. An seinem äußeren Rand weist das Druckstück 2 einen zylindrischen Kragen 4 auf. Auf dem Druckstück 2 steht über Kopf eine erste Wägezelle 5. Der Kraftaufnahmekopf 6 der Wägezelle 5 greift in die Ausnehmung 3 ein und liegt mit seiner ebenen Stirnfläche auf der kugelkappenförmigen Kraftübertragungsfläche des Druckstücks 2 auf. Zwischen dem Kragen 4 und dem Außenumfang der Wägezelle 5 ist ein gleichmäßiger Zwischenraum vorhanden, der so groß bemessen ist, daß es während des Prüfvorgangs nicht zu einer Berührung zwischen dem Kragen 4 und der Wägezelle 5 kommt. Mit ihrer Aufstellfläche ist die Wägezelle 5 über eine zentrierende Zwischenplatte 7 mit der Aufstellfläche einer zweiten Wägezelle 8 verbunden. Auf den Kraftaufnahmekopf 9 der Wägezelle 8 ist ein Druckstück 10 aufgesetzt, das ebenfalls eine Ausnehmung 11 mit einer als Kugelkappe ausgebildeten Kraftübertragungsfläche hat, die auf der ebenen Stirnfläche des Kraftaufnahmekopfs 9 aufliegt. Der Radius der Kugelkappe des Druckstücks 10 hat ebenfalls die Größe R. Die Einleitung der Prüflast erfolgt über ein Joch 12 der Belastungsmaschine, das auf der ebenen Oberseite des Druckstücks 10 aufliegt.

Durch die kugelkappenförmigen Kraftübertragungsflächen der Druckstücke 2 und 10 wird eine von Zwangskräften freie Lasteinleitung in die beiden Wägezellen 5 und 8 gewährleistet. Die Stabilität der Anordnung wird dabei dadurch erreicht, daß der Radius der Kugelkappen deutlich größer ist als der Abstand B, den die Kugelkappen voneinander haben. Auf diese Weise entsteht bei der Kraftübertragung an den Kugelkappen ein aufrichtendes Moment, das einer Auslenkung der Wägezellenanordnung aus der Vertikalen entgegenwirkt. Eine weitere Voraussetzung für die Stabilität ist, daß der Pendelwinkel bei einer Auslenkung kleiner bleibt als der an den Kraftübertragungsflächen wirksam Reibungswinkel. Nimmt man einen Reibungskoeffizienten an den Kraftübertragungsflächen von größer 0,1 an, so ist der Pendelwinkel auf kleiner 5,5° zu begrenzen. Dies läßt sich mit heutigen Belastungsmaschinen ohne weiteres erreichen.

Der Kragen 4 hat die Aufgabe, ein Kippen der Wägezellenanordnung bei einer Drehbewegung des Drehtellers 1 zu verhindern. Während des Belastungsvorgangs ist der Kragen 4 unwirksam. Anstelle des Kragens 4 können auch in den Drehteller integrierte Kippsicherungen ein Kippen der Anordnung beim Drehen des Drehtellers verhindern.

Figur 2 zeigt eine mögliche Ausführung der Erfindung, bei der zwei Wägezellen 5, 8 gleichsinnig übereinander angeordnet sind. Die Wägezelle 5 steht mit ihrer Aufstellfläche auf dem Drehteller 1. Auf dem Kraftaufnahmekopf der Wägezelle 5 befindet sich ein Druckstück 13, das im wesentlichen die Form eines Kegelstumpfs hat, in dessen kleinerer Kreisfläche eine Ausnehmung 14 mit einer als Kugelkappe ausgebildeten Bodenfläche vorgesehen ist, die auf dem Kraftaufnahmekopf 6 der Wägezelle 5 aufliegt. Die größere Kreisfläche des Druckstücks 13 ist zentrierend mit der Aufstellfläche der Wägezelle 8 verbunden. Die Krafteinleitung in die Wägezelle 8 erfolgt mit Hilfe des Jochs 12 in gleicher Weise wie bei dem Beispiel gemäß Figur 1 über das Druckstück 10. Diese Anordnung hat den Vorteil, daß sich zwischen den kugelkappenförmigen Kraftübertragungsflächen nur eine Wägezelle befindet. Der Abstand B der Kraftübertragungsflächen kann daher kleiner gehalten werden, wodurch die Stabilität der Anordnung erhöht wird. Weiterhin ist der für die Stabilität wesentliche Abstand B von der Bauhöhe der unteren Wägezelle 5 unabhängig, so daß auch Wägezellen oder Kraftaufnehmer größerer Bauhöhe geprüft werden können.

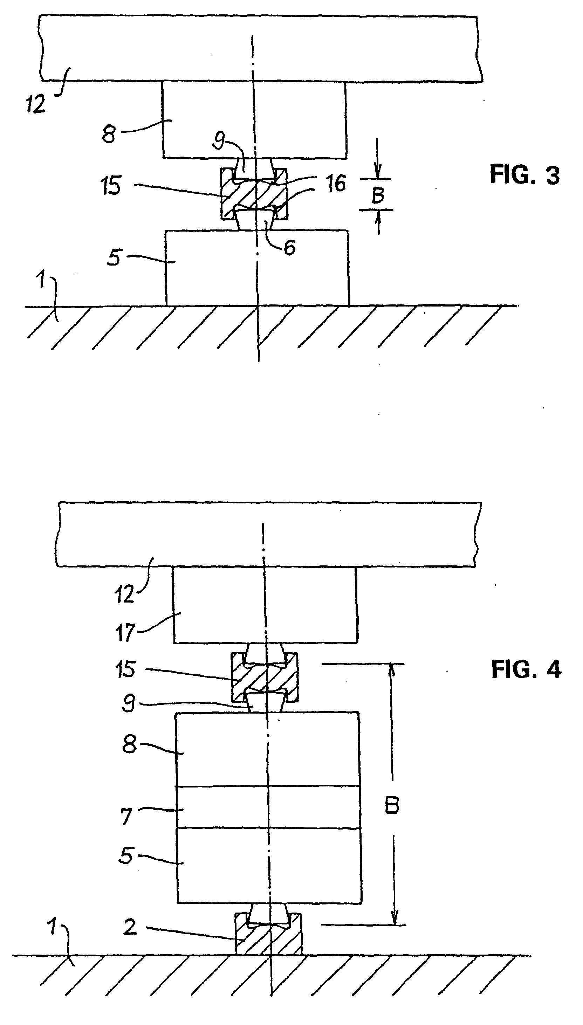

Bei der in Figur 3 gezeigten Anordnung zweier Wägezellen 5, 8 steht die Wägezelle 5 mit ihrer Aufstellfläche auf den Drehteller 1 und die Wägezelle 8 ist über Kopf auf der Wägezelle 1 angeordnet und liegt mit ihrer Aufstellfläche an dem Joch 12 der Belastungsmaschine an. Zwischen den Kraftaufnahmeköpfen 6, 9 der Wägezellen 5, 8 befindet sich ein zylindrisches Druckstück 15, das in seinen kreisförmigen Stirnflächen Ausnehmungen 16 mit als Kugelkappen ausgebildeten Bodenflächen hat, die auf den ebenen Kraftübertragungsflächen der Kraftaufnahmeköpfe 6, 8 aufliegen. Diese Anordnung hat den Vorteil, daß das für die Stabilität der Anordnung wesentliche Verhältnis zwischen dem Abstand B der Kraftübertragungsflächen und dem Radius der kugelkappenförmigen Bodenflächen durch die Formgestalt des Druckstücks 15 festgelegt ist und von der Bauhöhe der Wägezellen 2 nicht beeinflußt wird. Weiterhin ist von Vorteil, daß der Abstand B im Verhältnis zum Radius der Kugelkappen klein bemessen werden kann, wodurch besonders günstige Stabilitätsverhältnisse erreicht werden.

Figur 4 zeigt ein Beispiel für die gleichzeitige Prüfung von drei Wägezellen in einer Belastungsmaschine. Auf dem Drehteller 1 der Belastungsmaschine sind in gleicher Weise wie bei dem Ausführungsbeispiel gemäß Figur 1 auf einem Druckstück 2 zwei Wägezellen 5, 8 mit einer dazwischenliegenden Zwischenplatte 7 übereinander angeordnet. Auf dem Kraftaufnahmekopf 9 der Wägezelle 8 befindet sich das Druckstück 15 gemäß Figur 3 und auf diesem über Kopf eine Wägezelle 17, die mit ihrer Aufstellfläche das Joch 12 trägt. Die erforderliche Stabilität ist bei dieser Anordnung gegeben, wenn der Abstand B zwischen den am weitesten voneinander entfernten kugelkappenförmigen Kraftübertragungsflächen gleich oder kleiner ist als der Radius der Kugelkappen.

Neben den beschriebenen Beispielen sind nach dem erfindungsgemäßen Verfahren noch weitere stabile Anordnungen von Kraftaufnehmern möglich, wobei die jeweils zu bevorzugende Anordnung entsprechend der Bauform der zu prüfenden Wägezellen oder Kraftaufnehmer auszuwählen ist. Wie die Beispiele jedoch zeigen, können mit dem erfindungsgemäßen Verfahren auf einfache Weise und ohne aufwendige Vorrichtungen zwei Wägezellen oder Kraftaufnehmer gleichzeitig mit einer Prüflast gemessen werden, wobei die hohen Anforderungen an die Lasteinleitung und die Meßgenauigkeit eingehalten werden.

## Patentansprüche

1. Verfahren zur gleichzeitigen Prüfung von mehreren Kraftaufnehmern (5,8), insbesondere Wägezellen, mit einer Drucklast unter Verwendung einer Belastungsmaschine, bei der die Prüflast zwischen einer mit dem Maschinenfundament verbundenen Aufstellplatte (1) und einem gegen die Aufstellplatte (1) drückenden Teil (12) der Belastungsmaschine wirksam ist, **dadurch gekennzeichnet, daß** die Kraftaufnehmer (5, 8) in Reihe übereinander zwischen der Aufstellplatte (1) und dem drückenden Teil (12) der Belastungsmaschine angeordnet werden, daß die Krafteinleitung an jedem Kraftaufnehmer (5,8) über wenigstens eine als Kugelkappe ausgebildete Kraftübertragungsfläche erfolgt, deren Radius so groß bemessen ist, daß bei der Belastung ein stabilisierendes Moment entsteht und daß der Pendelwinkel der Anordnung auf einen Wert begrenzt wird, der kleiner als der an den Kraftübertragungsflächen wirksame Reibungswinkel ist.

2. Verfahren nach Anspruch 1, **dadurch gekennzeichnet, daß** zwischen den Kraftaufnehmern (5, 8) und der Aufstellplatte (1) und/oder zwischen den Kraftaufnehmern (5,8) und dem drückenden Teil (12) ein Druckstück ( 2, 10) angeordnet wird, das auf einer Seite eine ebene Kraftübertragungsfläche und auf der entgegengesetzten Seite eine als Kugelkappe ausgebildete Kraftübertragungsfläche hat.

3. Verfahren nach einem der vorhergehenden Ansprüche, **dadurch gekennzeichnet, daß** zwischen zwei Kraftaufnehmern (8,17) ein Druckstück (15) angeordnet wird, das auf beiden entgegengesetzten Seiten jeweils eine als Kugelkappe ausgebildete Kraftübertragungsfläche hat.

4. Verfahren nach einem der vorhergehenden Ansprüche, **dadurch gekennzeichnet, daß** zwei Kraftaufnehmer (5, 8) mit ihren Aufstellflächen aneinander abgestützt werden, so daß der eine Kraftaufnehmer (5) mit seinem Kraftaufnahmekopf (6) über ein Druckstück (2) an der Aufstellplatte (1) und der andere Kraftaufnehmer (8) mit seinem Kraftaufnahmekopf (9) über ein Druckstück (10) an dem drückenden Teil (12) abgestützt wird.

5. Verfahren nach Anspruch 4, wobei die Aufstellplatte (1) der Belastungsmaschine als Drehteller ausgebildet ist, **dadurch gekennzeichnet, daß** an dem Drehteller eine Kippsicherung (4) angebracht wird, die den dem Drehteller zugekehrten Kraftaufnehmer (5) mit Abstand umgibt.

6. Verfahren nach Anspruch 5, **dadurch gekennzeichnet, daß** zwischen den beiden Kraftaufnehmern (5, 8) eine zentrierende Zwischenplatte (7) mit parallelen Auflageflächen angeordnet wird.

## Claims

1. Method of simultaneously testing a plurality of force transducers (5, 8), in particular load cells, by means of a thrust load using a loading machine, in which the test load is effective between a mounting plate (1) connected to the machine bed and a part (12), which presses against the mounting plate (1), of the loading machine, **characterized in that** the force transducers (5, 8) are arranged in a line one above the other between the mounting plate (1) and the pressing part (12) of the loading machine, **in that** the load introduction at each force transducer (5, 8) is effected via at least one force transmission surface in the form of a spherical cap, the radius of which is of a size such that a stabilizing moment arises during the loading and that the swing angle of the arrangement is limited to a value, which is smaller than the friction angle effective at the force transmission surface.

2. Method according to claim 1, **characterized in that** between the force transducers (5, 8) and the mounting plate (1) and/or between the force transducers (5, 8) and the pressing part (12) there is arranged a thrust piece (2, 10), which at one end has a flat force transmission surface and at the opposite end has a force transmission surface in the form of a spherical cap.

3. Method according to one of the preceding claims, **characterized in that** there is arranged between two force transducers (8, 17) a thrust piece (15), which at each opposite end has a force transmission surface in the form of a spherical cap.

4. Method according to one of the preceding claims, **characterized in that** two force transducers (5, 8) are mutually supported by their mounting surfaces so that the one force transducer (5) is supported by its force pick-up head (6) via a thrust piece (2) against the mounting plate (1) and the other force transducer (8) is supported by its force pick-up head (9) via a thrust piece (10) against the pressing part (12).

5. Method according to claim 4, wherein the mounting plate (1) of the loading machine takes the form of a rotary table, **characterized in that** provided on the rotary table is an anti-tilt device (4), which with clearance surrounds the force transducer (5) facing the rotary table.

6. Method according to claim 5, **characterized in that** disposed between the two force transducers (5, 8) is a centring intermediate plate (7) with parallel supporting surfaces.

## Revendications

1. Procédé de vérification simultanée de plusieurs capteurs de force (5, 8), en particulier de cellules de pesée, avec une charge de pression par utilisation d'une machine de charge, dans laquelle la charge d'essai opère entre une plaque d'appui (1) reliée au socle de la machine et une partie (12) de la machine de charge, pressant contre la plaque d'appui (1), **caractérisé en ce que** les capteurs de force (5, 8) sont disposés en rangée l'un au-dessus de l'autre entre la plaque d'appui (1) et la partie (12) de pression de la machine de charge, **en ce que** l'introduction des forces sur chaque capteur de force (5, 8) s'effectue à travers au moins une surface de transmission des forces, réalisée en tant que capuchon sphérique, dont le rayon est suffisamment grand pour que pendant la charge il s'établisse un moment de stabilisation et **en ce que** l'angle d'oscillation du dispositif est limité à une valeur qui est inférieure à l'angle de friction qui agit sur les surfaces de transmission des forces.

2. Procédé selon la revendication 1, **caractérisé en ce qu'**il est disposé, entre les capteurs de force (5, 8) et la plaque d'appui (1) et/ou entre les capteurs de force (5, 8) et la partie (12) opérant la pression, une pièce de pression (2, 10) qui présente, sur un côté, une surface plane de transmission des forces et sur le côté opposé, une surface de transmission des forces réalisée en tant que capuchon sphérique.

3. Procédé selon l'une des revendications précédentes, **caractérisé en ce qu'**il est disposé, entre deux capteurs de force (8, 17), une pièce de pression (15) qui présente, sur chacun de ses deux côtés opposés, une surface de transmission des forces réalisée en tant que capuchon sphérique.

4. Procédé selon l'une des revendications précédentes, **caractérisé en ce que** deux capteurs de force (5, 8) s'appuient l'un contre l'autre par leurs surfaces d'appui, de sorte qu'un capteur de force (5) prend appui par sa tête de réception de force (6), par l'intermédiaire d'une pièce de pression (2), contre la plaque d'appui (1), et l'autre capteur de force (8) prend appui, par sa tête de réception de force (9), par l'intermédiaire d'une pièce de pression (10), contre la partie (12) opérant la pression.

5. Procédé selon la revendication 4, dans lequel la plaque d'appui (1) de la machine de charge est réalisée en tant que plateau tournant, **caractérisé en ce que** sur le plateau tournant est placée une sûreté contre un basculement (4) qui entoure, à distance, le capteur de force (5) tourné vers le plateau tournant.

6. Procédé selon la revendication 5, **caractérisé en ce qu'**une plaque intermédiaire (7) de centrage aux surfaces d'appui parallèles est disposée entre les deux capteurs de force (5, 8).
